(19) Europäisches Patentamt / European Patent Office / Office européen des brevets

(11) **EP 4 254 447 A1**

(12) **EUROPEAN PATENT APPLICATION**
published in accordance with Art. 153(4) EPC

(43) Date of publication:
**04.10.2023 Bulletin 2023/40**

(21) Application number: **21919852.0**

(22) Date of filing: **08.11.2021**

(51) International Patent Classification (IPC):
**H01F 38/14** (2006.01)    **H01F 1/06** (2006.01)
**H02J 50/10** (2016.01)    **H02J 50/00** (2016.01)
**B60L 53/12** (2019.01)

(52) Cooperative Patent Classification (CPC):
**B60L 53/12; H01F 1/06; H01F 38/14; H02J 50/00;**
**H02J 50/10;** Y02T 10/70; Y02T 10/7072;
Y02T 90/14

(86) International application number:
**PCT/KR2021/016115**

(87) International publication number:
**WO 2022/154228 (21.07.2022 Gazette 2022/29)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **12.01.2021 KR 20210003726**

(71) Applicant: **SKC Co., Ltd.**
**Suwon-si, Gyeonggi-do 16336 (KR)**

(72) Inventors:
• **KIM, Nayoung**
  **Anseong-si, Gyeonggi-do 17561 (KR)**
• **CHOI, Jonghak**
  **Uiwang-si, Gyeonggi-do 16083 (KR)**
• **LEE, Seunghwan**
  **Seoul 05698 (KR)**
• **PARK, Jonghwi**
  **Suwon-si, Gyeonggi-do 16205 (KR)**
• **KIM, Taekyoung**
  **Seoul 06277 (KR)**

(74) Representative: **BCKIP Part mbB**
**Siegfriedstraße 8**
**80803 München (DE)**

(54) **COMPOSITE-TYPE MAGNETIC COMPOSITE FOR CHARGING ELECTRIC TRANSPORTATION MEANS, PAD ASSEMBLY COMPRISING SAME, AND ELECTRIC TRANSPORTATION MEANS COMPRISING SAME**

(57) Disclosed herein is a pad assembly for power reception of electric transportation, which includes a receiving pad configured to support a receiving coil, the receiving coil connected to an external component by a wire and positioned on the receiving pad, and a magnetic complex layer disposed above or below the receiving coil, in which the increment in inductance per unit density of the magnetic complex layer in the pad assembly after assembly is 25 %·cm$^3$/g or less compared to before assembly. According to the present invention, wireless charging is possible with excellent charging efficiency for electric transportation, and the excellent charging efficiency can be maintained well even when an impact or repeated vibration is applied to the pad assembly.

Fig. 2

**Description**

BACKGROUND

**1. Field of the Invention**

The present invention relates to a composite type magnetic complex for charging electric transportation, which includes magnetic powders having a composite form bonded to each other by a polymer resin and has excellent physical properties and sufficient impact resistance to be applicable to electric transportation, a pad assembly including the composite type magnetic complex, and electric transportation including the pad assembly.

**2. Discussion of Related Art**

Electric transportation charging systems can be basically defined as systems for charging a battery installed in electric transportation using a commercial power grid or the power of an energy storage device. Electric transportation charging systems can have various forms according to a type of electric transportation. For example, an electric transportation charging system may include a conductive charging system using a cable or a non-contact wireless power transmission system. Generally, wireless power charging by the wireless power transmission system is a method of charging a battery using a current flowing through electromagnetic induction, in which a magnetic field generated by a current flowing in a primary coil of a charger generates an induced current in a secondary coil of the battery, and then the induced current charges the battery with chemical energy. This technique is as safe as a wired charging method because a contact point is not exposed and thus there is almost no risk of a short circuit.

Recently, as electric transportation has become popular, there has been a growing interest in building charging infrastructure. Various charging methods such as electric transportation charging using household chargers, battery replacement, rapid charging devices, and wireless charging devices are already appearing.

As the spread of electric transportation such as electric vehicles is expected to increase in the future, a safe and fast charging method that shortens a charging time and increases convenience is required. Accordingly, a wireless power charging method which can solve inconvenience of a wired charging method used by inserting a plug into an outlet and a variety of techniques for securing charging efficiency and safety through wireless charging are on the rise.

In particular, impact resistance and charging efficiency of the wireless power charging part are more important in that an impact that may occur due to an accident in electric transportation is large and affects safety of an occupant of the electric transportation.

[Related Art Document]

(Patent Document 1) Korean Registered Patent No. 10-1617403
(Patent Document 2) Korean Patent Laid-Open Application No. 10-2015-0050541

SUMMARY OF THE INVENTION

The present invention is directed to a receiving part for generating an induced current by a power supply positioned outside electric transportation to charge a battery corresponding to power of the electric transportation and is directed to providing a composite type magnetic complex for charging electric transportation, which has excellent physical properties and sufficient impact resistance to be applicable to a vehicle, and electric transportation including the same.

According to an aspect of the present invention, there is provided a pad assembly for power reception of electric transportation, which includes a receiving pad configured to support a receiving coil, the receiving coil connected to an external component by a wire and positioned on the receiving pad, and a magnetic complex layer disposed above or below the receiving coil.

An increment in inductance per unit density of the magnetic complex layer in the pad assembly after assembly is 25%·cm$^3$/g or more compared to before assembly.

The magnetic complex layer may include magnetic powders bonded to each other by a polymer resin and include a magnetic complex having elongation at break of 0.5% or more.

The magnetic complex layer may include a stacked structure including a magnetic complex containing magnetic powders, which are bonded to each other by a polymer resin, and a nanocrystalline grain magnetic body.

An increment in resistance per unit density of the magnetic complex layer in the pad assembly after assembly may be 40.0 %·cm$^3$/g or less compared to before assembly.

The pad assembly may have charging efficiency of 85% or more based on application of a magnetic complex layer with a thickness of 5 mm to a 35 cm × 35 cm receiving pad.

According to another aspect of the present invention, there is provided a pad assembly for power reception of electric transportation, which includes a receiving pad configured to support a receiving coil, the receiving coil connected to an external component by a wire and positioned on the receiving pad, and a magnetic complex layer disposed above or below the receiving coil, wherein charging efficiency per unit density of the magnetic complex layer in the pad assembly after assembly is 19%·cm$^3$/g or more compared to before assembly.

The magnetic complex layer may include a stacked structure including a magnetic complex containing magnetic powders, which are bonded to each other by a polymer resin, and a nanocrystalline grain magnetic body.

An increment in resistance per unit density of the magnetic complex layer in the pad assembly after assembly may be 40.0 %·cm$^3$/g or less compared to before assembly.

According to still another aspect of the present invention, there is provided electric transportation including the above-described pad assembly.

BRIEF DESCRIPTION OF THE DRAWINGS

The above and other objects, features and advantages of the present invention will become more apparent to those skilled in the art by describing exemplary embodiments thereof in detail with reference to the accompanying drawings, in which:

FIG. 1 is a configuration diagram illustrating a wireless power receiving device for wireless charging of an electric vehicle according to one embodiment;
FIG. 2 is a perspective view illustrating the wireless power receiving device for wireless charging of the electric vehicle according to one embodiment;
FIG. 3 is a perspective view for describing a state in which a magnetic complex layer is disposed in a pad assembly according to one embodiment; and
FIG. 4 is a conceptual diagram for describing a cross section of a structure of a hybrid magnetic complex layer according to one embodiment.

DETAILED DESCRIPTION OF EXEMPLARY EMBODIMENTS

Hereinafter, embodiments will be described in detail with reference to the accompanying drawings so that those skilled in the art to which the present invention pertains can easily carry out the embodiments. However, the embodiments may be implemented in several different forms and are not limited to the embodiments described herein. Throughout the present specification, the same reference numerals are assigned to similar components.

Throughout the present specification, the term "a combination thereof' included in an expression of a Markush form means a mixture or combination of one or more selected from the group consisting of components described in the expression of the Markush form and means including one or more selected from the group consisting of the above components.

Throughout the present specification, terms such as "first," "second," "A," and "B" are used to distinguish the same terms from each other. In addition, the singular form includes the plural form unless the context clearly notes otherwise.

In the present specification, a singular form is construed with a meaning including the singular form or a plural form construed in context unless otherwise specified.

Throughout the present specification, when a first component is referred to as being "connected to" a second component, this includes not only being "directly connected to" but also being "indirectly connected to" by interposing a third component between the first component and the second component. Further, when a component is referred to as "including" another component, this does not mean that other components are excluded, and other components can be included unless specifically stated otherwise.

Throughout the present specification, the expression "X increment of a pad assembly after assembly compared to before assembly" means that "X value of the pad assembly assembled to include a magnetic complex layer arranged in the pad assembly" of an embodiment is represented in a percentage % based on "X value of the pad assembly before assembly."

In the case of a power transmission/reception module applied to transportation to which an electric force is applied, particularly, a receiving module, stability is important, and unlike a receiving module applied to a portable electronic device, the power transmission/reception module may directly receive an impact applied to the transportation or noise caused by the transportation. The inventors of the present invention contemplated a method of improving physical properties by considering that, when a magnetic sheet included in the receiving module is damaged due to an impact, power receiving efficiency of the receiving module may be significantly reduced and the magnetic sheet should have excellent physical properties within a predetermined size and volume, thereby completing the present invention and proposing embodiments.

The electric transportation may be, for example, transportation using electricity as a main power source, such as an electric car, an electric bus, an electric motorcycle, an electric bicycle, or an electric kickboard.

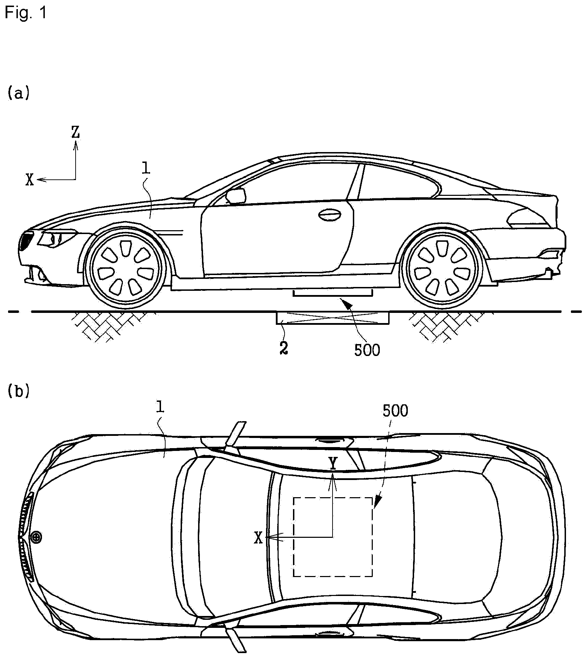

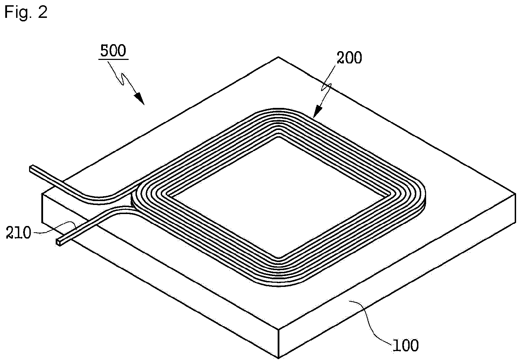

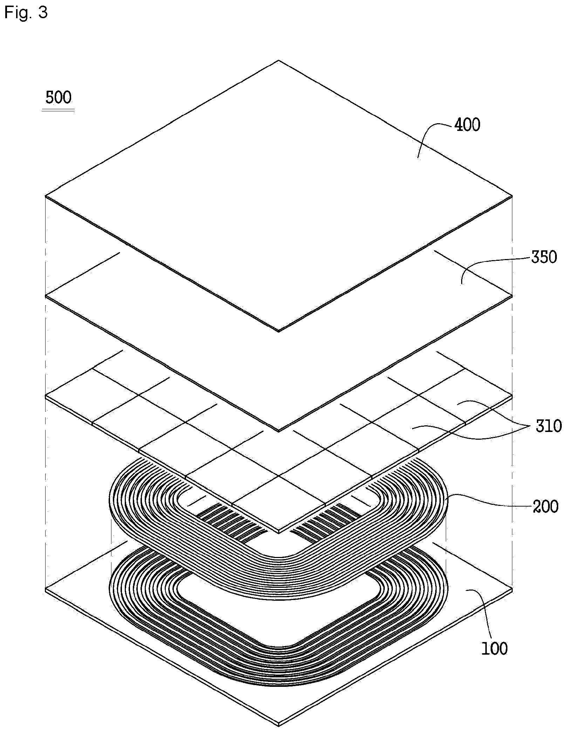

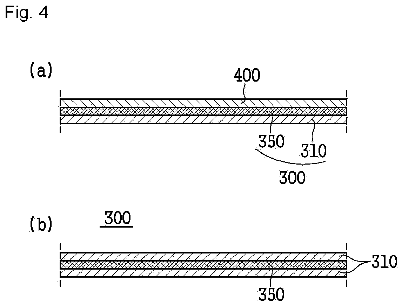

FIG. 1 is a configuration diagram illustrating a wireless power receiving device for wireless charging of an electric vehicle according to one embodiment, FIG. 2 is a perspective view illustrating the wireless power receiving device for wireless charging of the electric vehicle according to one embodiment, and FIG. 3 is a perspective view for describing a state in which a magnetic complex layer is disposed in a pad assembly according to one embodiment. In addition, FIG. 4 is a conceptual diagram for describing a cross section of a structure of a hybrid magnetic complex layer according to one embodiment. Hereinafter, embodiments will be described in more detail with reference to FIGS. 1 to 4.

In order to achieve the above object, a pad assembly 500 for power reception of an electric vehicle according to one embodiment includes a receiving pad 100 for supporting a receiving coil 200, a receiving coil 200 connected to an external component through a wire 210 and positioned on the receiving pad 100, and a magnetic complex layer 300 disposed above or below the receiving coil 200.

In the pad assembly 500, an increment in inductance per unit density of the magnetic complex layer in the pad assembly 500 after assembly may be 25 %·cm$^3$/g or more compared to before assembly. This means that a magnetic focusing force is excellent, and charging efficiency can be further improved by applying the magnetic complex layer having the above characteristic to the pad assembly.

The magnetic complex layer 300 may include i) a magnetic complex 310 or ii) a stacked structure including the magnetic complex 310 and a nanocrystalline grain magnetic body 350.

The magnetic complex 310 includes magnetic powders bonded to each other by a polymer resin.

The magnetic complex 310 may be in the form of a sheet having a predetermined area or in the form of a block having a predetermined area and thickness.

The magnetic complex layer 300 for an electric vehicle is included in a large area of the charging pad assembly 500 for an electric vehicle. Specifically, the magnetic complex layer 300 may be included in an area of 200 cm$^2$ or more, in an area of 400 cm$^2$ or more, or in an area of 600 cm$^2$ or more. Alternatively, the magnetic complex layer 300 for an electric vehicle may be included in an area of 10,000 cm$^2$ or less. In the large-area magnetic complex layer 300, a method of arranging a plurality of magnetic complexes may be applied. In this case, each magnetic complex 310 may have an area of 60 cm$^2$ or more, an area of 90 cm$^2$, or an area ranging from 95 cm$^2$ to 900 cm$^2$.

As described above, when the magnetic powders are prepared in a form in which the magnetic powders are bonded to each other by the polymer resin, it is possible to provide a magnetic complex with fewer defects and less damage due to an impact over a large area.

The magnetic complex 310 for an electric vehicle may have an elongation at break of 0.5% or more. The magnetic complex with the above elongation at break has a characteristic that is difficult to obtain in a ceramic-based magnetic complex to which a polymer is not applied, and even when distortion occurs in the large-area magnetic complex due to an impact, the large-area magnetic complex can reduce damage to the magnetic sheet itself.

Specifically, the elongation at break of the magnetic complex for electric vehicles may be 0.5% or more, 1% or more, or 2.5% or more. There is no particular limitation on an upper limit of the elongation at break, and when a content of the polymer resin is increased to improve the elongation at break, since physical properties such as inductance of the magnetic complex may be degraded, the elongation at break may be 10% or less.

The magnetic complex 310 for an electric vehicle has an important feature in which a change in a physical property before and after an impact is small.

Specifically, the magnetic complex 310 for an electric vehicle may have an inductance change rate of less than 5% and 3% or less before and after an impact applied with free fall from a height of 1 m. The inductance change rate is preferably 0% with no substantial change before and after the impact. More specifically, the inductance change rate of the magnetic complex for an electric vehicle before and after the impact applied with free fall from a height of 1 m may range from 0 to 3%, from 0.001 to 2%, or from 0.01 to 1.5%. The magnetic complex for an electric vehicle with the above inductance change rate may have a relatively small inductance change rate before and after the impact so that a magnetic complex with improved stability can be provided.

A change rate in Q factor of the magnetic complex 310 for an electric vehicle before and after the impact applied with free fall from a height of 1 m may range from 0 to 5%, from 0.001 to 4%, or from 0.01 to 2.5%. These values are far superior results compared to those of a ferrite magnetic sheet, and this means that stability and impact resistance of the magnetic complex are further improved because the change in physical property before and after the impact is small.

A resistance change rate of the magnetic complex 310 for an electric vehicle before and after the impact applied with free fall from a height of 1 m may range from 0 to 2.8%, from 0.001 to 1.8%, or from 0.1 to 1.0%. These values are far superior results compared to those of a ferrite magnetic sheet, and since a change of a resistance value before and after the impact is small, even when the magnetic complex is repeatedly applied in an environment where an impact and a vibration are actually applied, the magnetic complex has a characteristic that the resistance value is maintained well below a predetermined level.

A reduction ratio in charging efficiency of the magnetic complex 310 for an electric vehicle before and after the impact applied with free fall from a height of 1 m may range from 0 to 6.8%, from 0.001 to 5.8%, or from 0.01 to 3.4%. The reduction ratio in charging efficiency means that the charging efficiency decreases to a very small extent even after the impact. This means that the magnetic complex applied in a relatively large area may provide stable physical properties even when an impact or distortion occurs repeatedly.

The charging efficiency is a result evaluated at a frequency of less than 100 kHz, for example, 85 kHz, and is evaluated in a frequency band distinguished from a frequency band applied to portable electronic devices such as mobile phones.

The magnetic complex 310 for an electric vehicle may be in the form of a block and may have a thickness of 1 mm or more, 2 mm or more, 3 mm or more, or 4 mm or more. Alternatively, the block-shaped magnetic complex 310 for an electric vehicle may have a thickness of 6 mm or less. The block-shaped magnetic complex may be manufactured by injection molding or the like and has an advantage of being manufactured with a relatively thick thickness.

The magnetic complex 310 for an electric vehicle may be in the form of a sheet and may have a thickness of 80 $\mu$m or more or a thickness ranging from 85 $\mu$m to 150 $\mu$m. A conventional method of manufacturing a film or a sheet may be applied to the manufacture of the magnetic complex in the form of a sheet, and this has the advantage of enabling the magnetic complex to be manufactured with an intended area and size with an excellent yield.

When sheet-shaped magnetic complexes in the form of a sheet are stacked and applied to the magnetic complex 310 for an electric vehicle, the magnetic complex 310 may be 20 or more stacked sheet-shaped magnetic complexes, or 50 or more stacked sheet-shaped magnetic complexes. The magnetic complex 310 may be 150 or less stacked sheet-shaped magnetic complexes, or 100 or more stacked sheet-shaped magnetic complexes.

The polymer resin may be cured, and the magnetic complex 310 may contain 85 wt% or more magnetic powder. Specifically, the magnetic complex may include 85 to 99 wt% or 88 to 99 wt% magnetic powder.

The magnetic complex 310 for an electric vehicle may have permeability ranging from 20 to 150,000 in a frequency band of less than 100 kHz. For example, the magnetic complex 310 for an electric vehicle may have permeability ranging from 20 to 150,000 at a frequency of 85 kHz.

Specifically, the magnetic complex 310 for an electric vehicle may have permeability ranging from 30 to 300 in a frequency band of less than 100 kHz. For example, the magnetic complex 310 for an electric vehicle may have permeability ranging from 30 to 300 at a frequency of 85 kHz.

Specifically, the magnetic complex 310 for an electric vehicle may have permeability ranging from 600 to 3,500 in a frequency band of less than 100 kHz. For example, the magnetic complex 310 for an electric vehicle may have permeability ranging from 600 to 3,500 at a frequency of 85 kHz.

Specifically, the magnetic complex 310 for an electric vehicle may have permeability ranging from 10,000 to 150,000 in a frequency band of less than 100 kHz. For example, the magnetic complex 310 for an electric vehicle may have permeability ranging from 10,000 to 150,000 at a frequency of 85 kHz.

The magnetic complex 310 contains a magnetic powder. The magnetic powder may be a metal magnetic powder containing permalloy, sendust, or Fe-Si-Al-based, Fe-Si-Cr-based, or Fe-Si-B-Cu-Nb-based nanocrystalline structure or a mixed powder thereof.

The Fe-Si-B-Cu-Nb-based nanocrystalline structure is a nanocrystalline structure containing 70 to 85 mol% of Fe, 10 to 29 mol% of Si and B, and 1 to 5 mol% of Cu and Nb and includes, for example, $Fe_{73.5}CuNb_3Si_{13.5}B_9$. When the nanocrystalline structure is included in the metal magnetic powder, higher shielding performance can be obtained.

A particle diameter of the magnetic powder may range from 3 nm to 1 mm.

The magnetic complex 310 may have heat resistance with which the magnetic complex 310 is able to withstand a high temperature condition and corrosion resistance with which the magnetic complex 310 is able to withstand various corrosive environments.

A curable resin may be used as a polymer resin into which the magnetic powder is mixed, and specifically, may include a photocurable resin, a thermosetting resin, and a highly heat-resistant thermoplastic resin. The curable resin may include, for example, a polyurethane-based resin, acrylic resin, polyester resin, isocyanate resin, or epoxy resin, but the present invention is not limited thereto.

Specifically, the polymer resin may include a polyurethane-based resin, an isocyanate-based curing agent, and an epoxy-based resin.

The polyurethane-based resin may have a number average molecular weight in the range of about 500 to 50,000 g/mol, about 10,000 to 50,000 g/mol, or about 10,000 to 40,000 g/mol.

The isocyanate-based curing agent may be an organic diisocyanate.

For example, the isocyanate-based curing agent may be an aromatic diisocyanate, an aliphatic diisocyanate, a substituted diisocyanate, or a mixture thereof.

The epoxy-based resin may include bisphenol type epoxy resins such as a bisphenol A type epoxy resin, a bisphenol F type epoxy resin, a bisphenol S type epoxy resin, and a tetrabromobisphenol A type epoxy resin; glycidyl ether type epoxy resins such as spiro cyclic epoxy resin, a naphthalene type epoxy resin, a biphenyl type epoxy resin, a terpene type epoxy resin, tris(glycidyloxyphenyl)methane, and tetrakis(glycidyloxyphenyl)ethane; a glycidyl amine type epoxy resin such as tetraglycidyl diaminodiphenylmethane; a cresol novolak type epoxy resin; and novolak-type epoxy resins such as a phenol novolak-type epoxy resin, an α-naprol novolak-type epoxy resin, and a brominated phenol novolak-type epoxy resin. A single type of these epoxy-based resins may be used or a combination of two or more types may be used.

The magnetic complex 310 may include a 1 to 15 wt% or 1 to 12 wt% polymer resin.

Alternatively, the magnetic complex 310 may include a 75 to 85 wt% polyurethane-based resin, a 10 to 18 wt% isocyanate-based curing agent, and a 3 to 10 wt% epoxy-based resin based on the total weight of the polymer resin (the remaining amount is a magnetic powder). When a polymer resin having the above-described composition is applied as the polymer resin, it is possible to provide a magnetic complex which is easier to manufacture and has excellent physical properties.

The magnetic complex 310 may be manufactured through a sheeting process of mixing a magnetic powder and a polymer resin composition into slurry, forming the slurry into a sheet shape, and curing (thermally curing) the slurry, but in order to manufacture a large-area magnetic complex having a predetermined thickness, a composite block may be manufactured by injection molding. A conventional sheeting or blocking method may be applied as the sheeting or blocking method in the manufacturing process, and a detailed method is not particularly limited.

The nanocrystalline grain magnetic body 350 includes a nanocrystalline magnetic body or soft magnetic body. For example, an Fe-Si-Al-based nanocrystalline magnetic body, an Fe-Si-Cr-based nanocrystalline magnetic body, or an Fe-Si-B-Cu-Nb-based nanocrystalline magnetic body may be applied as the nanocrystalline grain magnetic body 350, but the present invention is not limited thereto. Specifically, a Fe-Si-B-Cu-Nb-based nanocrystalline structure is a nanocrystalline structure containing 70 to 85 mol% of Fe, 10 to 29 mol% of Si and B, and 1 to 5 mol% of Cu and Nb and includes, for example, $Fe_{73.5}CuNb_3Si_{13.5}B_9$. When the nanocrystalline grain magnetic body 350 and the magnetic complex 310 are stacked and applied, a more excellent inductance increase effect of the pad can be achieved.

When the magnetic complex layer 300 includes a stacked structure of the magnetic complex 310 and the nanocrystalline grain magnetic body 350, the magnetic complex layer 300 has an advantage in that impact resistance is improved by the magnetic complex and an increment in inductance is improved by the nanocrystalline magnetic body. In addition, the magnetic complex layer 300 has an advantage of additionally obtaining effects of significantly increasing the increment in inductance compared to a unit density of the magnetic complex layer, reducing an increment in resistance, and reducing weight and improving charging efficiency when a predetermined volume of magnetic complex layer is applied, which are difficult to obtain simultaneously.

The magnetic complex 310 and the nanocrystalline grain magnetic body 350 included in the magnetic complex layer 300 may be applied at a thickness ratio of 1:0.0001 to 5. When the thickness ratio is less than 1:0.0001, an effect of stacking the nanocrystalline grain magnetic body can be substantially insignificant, and when the thickness ratio exceeds 1:5, cost efficiency can decrease.

Specifically, the magnetic complex 310 and the nanocrystalline grain magnetic body 350 included in the magnetic complex layer 300 may be applied at a thickness ratio of 1:0.01 to 1, 1:0.01 to 0.5, 1:0.02 to 0.1, or 1:0.03 to 0.7. When the magnetic complex and the nanocrystalline grain magnetic body are applied together within the above ranges, a pad assembly having a faster charging speed can be provided.

An increment in inductance per unit density of the magnetic complex layer in the pad assembly 500 after assembly may be 25 %·cm³/g or more, 30 %·cm³/g or more, 35.5 %·cm³/g or more, or 37 %·cm³/g or more compared to before assembly. In the pad assembly 500, the increment in inductance per unit density of the magnetic complex layer in the pad assembly 500 after assembly may be 50 %·cm³/g or less or 45 %·cm³/g compared to before assembly. The increment in inductance is higher than or equal to that of ferrite with a relatively heavy weight, is significantly improved compared to the case of applying only the magnetic complex itself, and is an excellent physical property obtained at an improved level even in impact resistance.

An increment in resistance per unit density of the magnetic complex layer in the pad assembly 500 after assembly may be 40.0 %·cm³/g or less, 30 %·cm³/g or less, 26.0 %·cm³/g or less, or 20.0 %·cm³/g or less compared to before assembly. In addition, in the pad assembly 500, the increment in resistance of the pad assembly 500 after assembly compared to before assembly may have a negative value and may be -20 %·cm³/g or more. The increase in resistance is a result of significantly reducing a resistance value which increases when the nanocrystalline grain magnetic body is applied and is considered as an excellent physical property obtained by applying the magnetic complex and the nanocrystalline grain magnetic body together.

Charging efficiency per unit density of the magnetic complex layer in the pad assembly 500 after assembly may be 19 %·cm³/g or more or 20 %·cm³/g or more compared to before assembly. Alternatively, the charging efficiency per unit density of the magnetic complex layer in the pad assembly 500 after assembly may be 30 %·cm³/g or less or

25 %·cm$^3$/g or less compared to before assembly. The increase in charging efficiency is considered as the result of significantly improving the charging efficiency by the magnetic complex layer, especially when the pad assembly is applied in a limited condition of the predetermined volume and area.

The charging efficiency of the pad assembly 500 may be 85% or more, 89% or more, 99% or less, or 95% or less based on application of the magnetic complex layer 300 with a 5 mm thickness to a 35.5 cm $\times$ 35.cm receiving pad to which a coil and a frame with SAE J2954 WPT2 Z2 Class standard TEST standard are applied.

The increment in resistance of the pad assembly 500 may be 200% or less or 150% or less, and may have a negative value of -80% or more based on application of the magnetic complex layer 300 with a 5 mm thickness to a 35 cm $\times$ 35 cm receiving pad to which a coil and a frame with SAE J2954 WPT2 Z2 Class standard TEST standard are applied.

The increment in inductance of the pad assembly 500 may be 150% or more based on application of the magnetic complex layer 300 with a 5 mm thickness to a 35 cm $\times$ 35 cm receiving pad to which a coil and a frame with SAE J2954 WPT2 Z2 Class standard TEST standard are applied.

An electric vehicle 1 according to another embodiment includes the above-described pad assembly 500 for power reception of the electric vehicle. Descriptions of the pad assembly and the magnetic complex included therein overlap with the above descriptions, and thus the descriptions thereof will be omitted. The pad assembly 500 serves as a receiving part for wireless charging of an electric vehicle and allows efficient charging of the electric vehicle together with a power supply 2.

Hereinafter, the embodiments will be described in more detail through specific examples. The following examples are merely illustrative to aid understanding of the present invention, and the scope of the present invention is not limited by the following examples.

**1. Manufacturing example**

**Materials of magnetic complex**

Materials used in the following examples are as follows.

- Magnetic powder: sandust powder (C1F-02A by Crystallite Technology)
- Polyurethane resin: UD1357 by Daiichi Seika Co., Ltd.
- Isocyanate-based curing agent: isophorone diisocyanate by Sigma-Aldrich
- Epoxy resin: bisphenol A type epoxy resin (epoxy equivalent=189 g/eq) (EpikoteTM 828 by Japan Epoxy Resin)
- Nylon resin: nylon 12 (3020 by Ubesta) and nylon 6 (B40 by BASF)
- PP resin: 5030 by Korea Petrochemical Ind. Co., LTD.

**Example 1: Manufacturing of composite type magnetic complex**

Step 1) Preparation of magnetic powder slurry

A magnetic powder slurry was prepared by mixing 42.8 parts by weight of a magnetic powder, 15.4 parts by weight of a polyurethane-based resin dispersion (25 wt% polyurethane-based resin and 75 wt% 2-butanone), 1.0 part by weight of an isocyanate-based curing agent dispersion (62 wt% isocyanate-based curing agent, 25 wt% n-butyl acetate, and 13 wt% 2-butanone), 0.4 parts by weight of an epoxy resin dispersion (70 wt% epoxy resin, 3 wt% n-butyl acetate, 15 wt% 2-butanone, and 12 wt% toluene), and 40.5 parts by weight of toluene in a planetary mixer at a speed of about 40 to 50 rpm for about two hours.

Step 2) Manufacturing of composite type magnetic sheet

A carrier film was coated with the previously prepared magnetic powder slurry using a comma coater and dried at a temperature of about 110 °C to form a dried magnetic complex. The dried magnetic complex was compressed and cured by a hot press process at a temperature of about 170 °C and a pressure of about 9 Mpa for about 60 minutes to obtain a sheet-shaped magnetic complex. A content of the magnetic powder of the manufactured magnetic complex was about 90%, and a thickness of one sheet was about 100 $\mu$m. 40 to 50 sheets were stacked to form a magnetic complex with a thickness of about 4.8 mm, and then a test was performed on the magnetic complex.

**Example 2: Manufacturing of hybrid magnetic sheet**

A hybrid type magnetic sheet (with a thickness of 5 mm) of Example 2 was manufactured by arranging a nanocrystalline grain magnetic body sheet (with a thickness of 0.2 mm and manufactured by Hitachi, Ltd.) on one side of the composite type magnetic sheet (with the thickness of 4.8 mm) manufactured in Example 1 and by thermocompression bonding the nanocrystalline grain magnetic body sheet.

**Comparative Example 1: Ferrite magnetic sheet**

A PC-95 ferrite magnetic sheet (with a thickness of 5 mm) from TDK Corporation was used.

**Comparative Example 2: Magnetic sheet of nanocrystalline grain magnetic body**

Magnetic sheets of a nanocrystalline grain magnetic body from SKC Co., Ltd. were stacked to a thickness of 5 mm and used.

**2. Evaluation of physical properties of magnetic complex**

Physical properties of the sheets of the examples and comparative examples were evaluated by the following methods, and the results are shown in a table.

1) Evaluation of physical properties of composite type magnetic sheet

The properties of the composite type sheet of Example 1 and the ferrite of Comparative Example 1 were compared using the following method.

Method of applying impact

Samples of the examples and comparative examples were dropped from a height of 1 m and an impact was applied thereto.

Evaluation of elongation at break

Elongation at break was measured using a UTM device (INSTRON 5982 by INSTRON (Illinois Tool Works Inc.)) and was measured only for a sheet of 70 $\mu$m before the impact was applied according to ASTM D412 Type C.

Evaluation of inductance change rate

An inductance change rate was measured using an LCR Meter (IM3533 manufactured by Hioki Co.) by measuring inductance before and after application of the impact and calculating the change rate using the following equation 1.

(Equation 1)

$$\text{inductance change rate} = 100 \times (\text{inductance before impact} - \text{inductance after impact}) / (\text{inductance before impact})$$

Evaluation of resistance change rate and Q factor change rate

A resistance change rate was measured using the LCR Meter (IM3533 by Hioki Co.) by measuring inductance before and after application of the impact and calculating the change rate using the following equation 2.

(Equation 2)

$$\text{resistance change rate} = 100 \times (\text{resistance before impact} - \text{resistance after impact}) / (\text{resistance before impact})$$

In addition, the Q factor change rate was calculated using Equation 3.

(Equation 3)

Q factor change rate = 100 × (Q factor value before impact − Q factor value after impact) / (Q factor before impact)

Here, Q factor = (inductance × frequency × 2π / resistance)

Evaluation of degree of reduction in charging efficiency

The charging efficiency was calculated using the following equation 4 for each of the cases of the sheet before and after the impact, and the charging efficiency was measured in a condition of an output power of 1000 W and a frequency of 85 kHz.

(Equation 4)

reduction in charging efficiency = 100 × (charging efficiency before impact − charging efficiency after impact) / (charging efficiency before impact)

For all measurements, SAE J2954 WPT1 Z2 Class standard TEST standard coil and frame were applied, and a receiving pad (35.5 cm × 35.5 cm) and a transmitting pad (67.48 cm × 59.1 cm) were manufactured by stacking magnetic bodies, spacers, and aluminum plates and measured at a frequency of 85 kHz.

[Table 1]

|  | Impact application | Elongation at break | Inductance | Q factor | Resistance | Charging efficiency |
|---|---|---|---|---|---|---|
| Comparative Example 1 | Before | 0 | 230 | 481 | 263 | 94 |
|  | After | 0 | 218 | 414 | 290 | 91 |
| Example 1 | Before | 3% | 225 | 444 | 279 | 93 |
|  | After | 3% | 225 | 442 | 280 | 93 |

[Table 2]

| (%) | Elongation at break | Inductance change amount | Q factor change rate | Resistance change rate | Reduction in charging efficiency |
|---|---|---|---|---|---|
| Comparative Example 1 | 0 | 5.2 | 14 | 10.3 | 3 |
| Example 1 | 3 | 0 | 0.36 | 0.36 | 0 |

Referring to the results of Table 1, it can be confirmed that, when the sheet of Example 1 having an average value of elongation at break of 3% is compared with the sheet of Comparative Example 1, which is a ferrite sheet, each of the change rates of the factors such as the inductance, the Q factor, and the resistance before and after the impact ranged from 0 to 1 so that only a very slight change appeared before and after the impact was applied. On the other hand, in the sheet of Comparative Example 1, the change rates of the factors such as the inductance, the Q factor, and the resistance appeared at significant levels. In particular, the average value of the reduction in charging efficiency appeared as high as 3%, and it was confirmed that the charging efficiency of the sheet of Comparative Example 1 was significantly reduced by the application of impact. Consequently, it was confirmed that the sheet of Example 1 was more excellent for stable application as a receiving pad of a wireless charger in an environment where an impact is easily applied to an electric vehicle during traveling.

## 2) Evaluation of physical properties of hybrid sheet

After assembling the samples of the examples and comparative examples with a magnetic body, changes in inductance and charging efficiency were measured. The assembly of the magnetic body proceeded in the same way as in the evaluation of physical properties in 1), and the thicknesses of all sheets were 5 mm.

Evaluation of increment in inductance

The increment in inductance was calculated by measuring inductance before assembling the magnetic body using the LCR Meter (IM3533 by Hioki Co.) and measuring inductance of a pad in which the magnetic bodies of the examples and comparative examples were stacked.

Evaluation of increment in resistance

The increment in resistance was calculated by measuring resistance before assembling the magnetic body using the LCR Meter (IM3533 by HIOKI Co.) and measuring resistance of the pad in which the magnetic bodies of the examples and comparative examples were stacked.

Density measurement

The total density of the manufactured magnetic body was calculated on the basis of a volume and a weight and is shown in the following Table 3.

Charging efficiency evaluation 1

The charging efficiency was measured according to SAE J2954 WPT2 Z2 Class standard TEST. Specifically, SAE J2954 WPT2 Z2 Class standard TEST standard coil and frame were applied, and a receiving pad (35 cm × 35 cm) and a transmitting pad (75 cm × 60 cm) were manufactured by stacking magnetic bodies, spacers, and aluminum plates and measured in the same condition of output power of 6 kW at a frequency of 85 kHz.

[Table 3]

| | Increment in inductance (%) | Increment in resistance (%) | Charging efficiency (%) | Density (g/cm3) | Increment in inductance per unit density (%·cm3/g)* | Increment in resistance per unit density (%·cm3/g)* | Charging efficiency per unit density (%·cm3/g)* |
|---|---|---|---|---|---|---|---|
| Comparative Example 1 | 169 | -13 | 91 | 4.81 | 35.14 | -2.70 | 18.92 |
| Comparative Example 2 | 175 | 425 | 91 | 713 | 24.54 | 59.61 | 12.76 |
| Example 1 | 156 | -19 | 89 | 4.32 | 36.11 | -4.40 | 20.60 |
| Example 2 | 167 | 113 | 91 | 4.38 | 38.13 | 25.80 | 20.78 |
| * Increment in inductance per unit density = (increment in inductance) / (density of magnetic complex layer), * increment in resistance per unit density = (increment in resistance) / (density of magnetic complex layer), and * increment in charging efficiency per unit density per unit density = (charging efficiency) / (density of magnetic complex layer) | | | | | | | |

Referring to the results of Table 3, it was confirmed that, in the case of Comparative Example 2 to which the nanocrystalline grain magnetic body was applied, the charging efficiency was excellent, but the increment in resistance was significantly increased. In addition, it was also confirmed that, in the case of Comparative Example 2 to which the ferrite was applied, the increase in inductance was excellent and the charging efficiency was excellent, but the weight increased when applied to the same volume because the density was rather large.

In the case of the composite sheet of Example 1, the density was low, and thus the weight of the same volume was relatively light, the increment in inductance per unit density was excellent, and the increment in resistance was also a negative value and had an excellent characteristic. In the case of Example 2, the increase in inductance was excellently evaluated at a level similar to that of the ferrite or the nanocrystalline grain magnetic body itself, and the density was also evaluated lower than that of the ferrite as well as the nanocrystalline grain magnetic body and thus had an excellent physical property. However, the increment in resistance per unit density was slightly lowered compared to Example 1, but due to the characteristic of the receiving pad mounted in the electric vehicle, there is a practical limit to a size of the receiving pad itself and the volume that the magnetic complex layer can occupy. In terms of application to a predetermined volume, Example 2 was experimentally confirmed to enable higher charging efficiency than Example 1 to be obtained.

Embodiments of the present invention usefully provide a hybrid composite type magnetic complex with excellent impact resistance suitable for wireless charging of electric vehicles, a pad assembly including the hybrid composite type magnetic complex, and an electric vehicle including the pad assembly. The magnetic complex has excellent impact resistance, is light in weight, and enables wireless charging with excellent charging efficiency when applied to the pad assembly applied to a power receiving part. In addition, according to the embodiments, excellent charging efficiency can be maintained well even when an impact or repetitive vibration is applied to the pad assembly.

Although exemplary embodiments of the present disclosure have been described in detail, the scope of the prevent invention is not limited to these embodiments, and various modifications and improvements devised by those skilled in the art using the fundamental concept of the present disclosure, which is defined by the appended claims, further fall within the scope of the present invention.

## Claims

1. A pad assembly for power reception of electric transportation, the pad assembly comprising:

   a receiving pad configured to support a receiving coil;
   the receiving coil connected to an external component by a wire and positioned on the receiving pad; and
   a magnetic complex layer disposed above or below the receiving coil,
   wherein an increment in inductance per unit density of the magnetic complex layer in the pad assembly after assembly is 25 %·cm$^3$/g or more compared to before assembly.

2. The pad assembly of claim 1, wherein the magnetic complex layer includes magnetic powders bonded to each other by a polymer resin and includes a magnetic complex having elongation at break of 0.5% or more.

3. The pad assembly of claim 1, wherein the magnetic complex layer includes a stacked structure including a magnetic complex containing magnetic powders, which are bonded to each other by a polymer resin, and a nanocrystalline grain magnetic body.

4. The pad assembly of claim 1, wherein an increment in resistance per unit density of the magnetic complex layer in the pad assembly after assembly is 40.0 %·cm$^3$/g or less compared to before assembly.

5. The pad assembly of claim 1, wherein the pad assembly has charging efficiency of 85% or more based on application of a magnetic complex layer with a thickness of 5 mm to a 35 cm × 35 cm receiving pad.

6. A pad assembly for power reception of electric transportation, the pad assembly comprising:

   a receiving pad configured to support a receiving coil;
   the receiving coil connected to an external component by a wire and positioned on the receiving pad; and
   a magnetic complex layer disposed above or below the receiving coil,
   wherein charging efficiency per unit density of the magnetic complex layer in the pad assembly after assembly is 19 %·cm$^3$/g or more compared to before assembly.

7. The pad assembly of claim 6, wherein the magnetic complex layer includes a stacked structure including a magnetic complex containing magnetic powders, which are bonded to each other by a polymer resin, and a nanocrystalline grain magnetic body.

8. The pad assembly of claim 6, wherein an increment in resistance per unit density of the magnetic complex layer in the pad assembly after assembly is 40.0 %·cm$^3$/g or less compared to before assembly.

9. Electric transportation comprising the pad assembly for power reception of electric transportation according to claim 1 or claim 6.

Fig. 1

(a)

(b)

Fig. 2

Fig. 3

Fig. 4

(a)

400

350 310

300

(b) 300

310

350

# EP 4 254 447 A1

<table>
<tr><td colspan="2">INTERNATIONAL SEARCH REPORT</td><td>International application No.<br>**PCT/KR2021/016115**</td></tr>
</table>

| A. | CLASSIFICATION OF SUBJECT MATTER |
|---|---|

**H01F 38/14**(2006.01)i; **H01F 1/06**(2006.01)i; **H02J 50/10**(2016.01)i; **H02J 50/00**(2016.01)i; **B60L 53/12**(2019.01)i

According to International Patent Classification (IPC) or to both national classification and IPC

| B. | FIELDS SEARCHED |
|---|---|

Minimum documentation searched (classification system followed by classification symbols)

H01F 38/14(2006.01); G01V 3/10(2006.01); H01F 27/36(2006.01); H01F 41/00(2006.01); H01Q 1/38(2006.01); H02J 50/10(2016.01); H02J 50/70(2016.01); H02J 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무선 충전(wireless charging), 전기차(electric vehicle), 수신 코일(receiving coil), 자성 시트(magnetic sheet), 인덕턴스(inductance), 충전 효율(charging efficiency)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-1950947 B1 (LG INNOTEK CO., LTD.) 21 February 2019 (2019-02-21)<br>See paragraphs [0031]-[0048]; and figures 2-4. | 1-9 |
| A | KR 10-2019-0048708 A (NOPION CO., LTD.) 09 May 2019 (2019-05-09)<br>See paragraphs [0025]-[0085]; and figures 1-3. | 1-9 |
| A | US 2019-0214841 A1 (LG INNOTEK CO., LTD.) 11 July 2019 (2019-07-11)<br>See paragraphs [0031]-[0039]; claim 1; and figures 2-4. | 1-9 |
| A | US 9126491 B2 (ICHIKAWA, Shinji) 08 September 2015 (2015-09-08)<br>See columns 3-8; and figures 1-9. | 1-9 |
| PX | KR 10-2021-0007438 A (SKC CO., LTD.) 20 January 2021 (2021-01-20)<br>See paragraphs [0011]-[0021]; claims 1-9; and figure 3. | 1-9 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **03 March 2022** | **03 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

# EP 4 254 447 A1

| INTERNATIONAL SEARCH REPORT Information on patent family members | | | International application No. PCT/KR2021/016115 | | | |
|---|---|---|---|---|---|
| Patent document cited in search report | | Publication date (day/month/year) | Patent family member(s) | | Publication date (day/month/year) |
| KR 10-1950947 B1 | | 21 February 2019 | CN 105340131 A | | 17 February 2016 |
| | | | CN 105340131 B | | 05 November 2019 |
| | | | EP 3016202 A1 | | 04 May 2016 |
| | | | EP 3016202 A4 | | 10 August 2016 |
| | | | EP 3016202 B1 | | 08 April 2020 |
| | | | KR 10-2015-0001418 A | | 06 January 2015 |
| | | | KR 10-2081319 B1 | | 25 February 2020 |
| | | | US 10468918 B2 | | 05 November 2019 |
| | | | US 2016-0156103 A1 | | 02 June 2016 |
| | | | US 2018-0287433 A1 | | 04 October 2018 |
| | | | US 9997962 B2 | | 12 June 2018 |
| | | | WO 2014-208914 A1 | | 31 December 2014 |
| KR 10-2019-0048708 A | | 09 May 2019 | KR 10-1993323 B1 | | 11 October 2019 |
| US 2019-0214841 A1 | | 11 July 2019 | CN 107079610 A | | 18 August 2017 |
| | | | CN 107079610 B | | 03 September 2019 |
| | | | CN 107079610 B9 | | 06 December 2019 |
| | | | CN 110473687 A | | 19 November 2019 |
| | | | KR 10-1952359 B1 | | 26 February 2019 |
| | | | KR 10-2014456 B1 | | 26 August 2019 |
| | | | KR 10-2016-0037431 A | | 06 April 2016 |
| | | | KR 10-2078290 B1 | | 18 February 2020 |
| | | | US 10284001 B2 | | 07 May 2019 |
| | | | US 11038365 B2 | | 15 June 2021 |
| | | | US 2017-0244271 A1 | | 24 August 2017 |
| | | | US 2021-0351621 A1 | | 11 November 2021 |
| | | | WO 2016-052939 A1 | | 07 April 2016 |
| US 9126491 B2 | | 08 September 2015 | CN 102656648 A | | 05 September 2012 |
| | | | EP 2515314 A1 | | 24 October 2012 |
| | | | EP 2515314 A4 | | 21 June 2017 |
| | | | EP 2515314 B1 | | 15 May 2019 |
| | | | JP 2014-075975 A | | 24 April 2014 |
| | | | JP 5746049 B2 | | 08 July 2015 |
| | | | JP 5825337 B2 | | 02 December 2015 |
| | | | US 2012-0242447 A1 | | 27 September 2012 |
| | | | WO 2011-074091 A1 | | 23 June 2011 |
| KR 10-2021-0007438 A | | 20 January 2021 | KR 10-2213807 B1 | | 05 February 2021 |

Form PCT/ISA/210 (patent family annex) (July 2019)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101617403

- KR 1020150050541